# EUROPÄISCHE PATENTSCHRIFT

(11) **EP 2 203 510 B1**
(45) Veröffentlichungstag und Bekanntmachung des Hinweises auf die Patenterteilung: **11.11.2015**
(21) Anmeldenummer: 08804159.5
(22) Anmeldetag: 12.09.2008
(51) Int. Cl.: C08K 5/1575, C08L 67/02, C08K 5/103

(54) **EINE THERMOPLASTISCHE ZUSAMMENSETZUNG BEINHALTEND EIN FORMTRENNMITTEL BASIEREND AUF EINEM ESTER AUS DI- ODER POLYGLYCERINEN UND MINDESTENS EINER CARBONSÄURE**
THERMOPLASTIC COMPOSITION CONTAINING A MOLD RELEASE AGENT WHICH IS BASED ON AN ESTER OF DI- OR POLYGLYCEROLS AND AT LEAST ONE CARBOXYLIC ACID
COMPOSITION THERMOPLASTIQUE CONTENANT UN AGENT DE DÉMOULAGE À BASE D'UN ESTER DE DI- OU POLYGLYCÉRINES ET D'AU MOINS UN ACIDE CARBOXYLIQUE

(30) Priorität: 13.09.2007 DE 102007043753
(43) Veröffentlichungstag der Anmeldung: 07.07.2010
(73) Patentinhaber: Emery Oleochemicals GmbH, 40589 Düsseldorf (DE)
(72) Erfinder: DAUTE, Peter, 27616 Beverstedt (DE)
(74) Vertreter: Kinkeldey, Daniela
(86) Internationale Anmeldenummer: PCT/EP2008/062198
(87) Internationale Veröffentlichungsnummer: WO 2009/037210

(56) Entgegenhaltungen:
- EP-A- 1 544 233
- EP-A- 1 605 017
- JP-A- 4 334 449
- JP-A- 2006 124 451

## Beschreibung

Die vorliegende Erfindung betrifft, wie in den Ansprüchen definiert, eine thermoplastische Zusammensetzung, ein Verfahren zur Herstellung einer thermoplastischen Zusammensetzung, die durch dieses Verfahren erhältliche thermoplastische Zusammensetzung, ein Verfahren zur Herstellung eines auf einer thermoplastischen Zusammensetzung basierenden Formkörpers, einen durch dieses Verfahren erhältlichen Formkörper sowie die Verwendung eines Formtrennmittels beinhaltend einen Ester aus Di- oder Polyglycerinen und mindestens einer Carbonsäure.

Thermoplastische Zusammensetzungen, welche auf thermoplastischen Polymeren basieren, werden aufgrund ihrer thermoplastischen Eigenschaften häufig zur Herstellung von Forrnkörpern eingesetzt. Dabei werden die thermoplastischen Zusammensetzungen auf eine Temperatur oberhalb der Glasübergangstemperatur der thermoplastischen Polymere erhitzt und anschließend, beispielsweise mittels Sprifzgießverfahren, in ein Spritzgießwerkzeug eingespritzt, welches der Zusammensetzung seine gewünschte Form gibt.

Ein wirksames Formtrennverhalten ist jedoch eine Schlüsseleigenschaft für eine thermoplastische Zusammensetzung, um das effiziente und wirtschaftliche Verarbeiten zu Formkörpern beispielsweise mittels Spritzgießen zu ermöglichen. Normalerweise muss einer zur Herstellung von Formkörpern eingesetzten, thermoplastischen Zusammensetzung ein Formtrennmittel (MRA = *"mould release agent")* zugegeben werden, um dieses Verarbeitungsverhalten zu ermöglichen. Um als ein Formtrennmittel effektiv zu fungieren, muss ein solches Mittel oder eine solche Verbindung bei den Verarbeitungsbedingungen stabil sein, so dass es seine Wirksamkeit nicht verliert und/oder Verfärbung verursacht. Weiterhin darf das Formtrennmittel möglichst nur in soweit mit den Polymeren und anderen Komponenten der Zusammensetzung chemisch interagieren oder die Zusammensetzung auf andere Art negativ beeinflussen, dass die Eigenschaften des thermoplastischen Zusammensetzung nicht, oder wenn nicht vermeidbar, nur kaum negativ beeinflusst werden. Bei transparenten oder transluzenten Polymeren sollte das Formtrennmittel die Transparenz nicht verschlechtern. Während des Spritzgießens sollte das Formtrennmittel keine Ablagerungen auf der Oberfläche der Form bilden, noch sollte es nach dem Formen in die Oberfläche des Teils in einem solchen Maß migrieren, dass es auf der Oberfläche sichtbar wird. Eine solche Ablagerung eines Formtrennmittels auf der Oberfläche eines Formkörpers wird als "Beschlag" bezeichnet.

US 2005/0234171 A1 beschreibt eine auf aromatischen Polycarbonaten oder Mischungen aus aromatischen Polycarbonaten und Polyestern basierende, thermoplastische Zusammensetzung, welche eine Mischung aus einem Fettsäureester eines Polyols mit 2 bis 6 Hydroxylgruppen und einer C₁₀-C₃₆-Carbonsäure und einem gesättigten α-olefinischen Oligomer als Formtrennmittel beinhaltet. Der Nachteil dieser thermoplastischen Zusammensetzung besteht jedoch unter anderem darin, dass das darin enthaltene Formtrennmittel, welches aus zwei chemisch unterschiedlichen Komponenten besteht (Fettsäureester und α-olefinisches Oligomer), in seiner chemischen Zusammensetzung sehr komplex ist. Außerdem ist die Transparenz der in der US 2005/0234171 A1 beschriebenen, thermoplastischen Zusammensetzung noch verbesserungsfähig.

Des weiteren weisen die im Stand der Technik, insbesondere in der US 2005/0234171 Al, eingesetzten Formtrennmittel eine hohe Flüchtigkeit auf, was dazu führt, dass aufgrund der hohen Temperaturen bei der Herstellung von Formkörpern ein Teil des Formtrennmittels entweicht. Dieses ist nicht nur aus toxikologischen Gründen bedenklich, sondern führt auch zur einer Verschlechterung des Ablöseverhaltens der thermoplastischen Zusammensetzunge an den Oberflächen eines Spritzgießwerkzeugs

Der vorliegenden Erfindung lag die Aufgabe zugrunde, die sich aus dem Stand ergebenen Nachteile im Zusammenhang mit thermoplastischen Formmassen zumindest teilweise zu überwinden.

Eine erfindungsgemäße Aufgabe lag darin, ein Formtrennmittel zu schaffen, däss sich neben einer kostengünstigen Herstellbarkeit und guten Formtrenneigenschaften durch eine gute Umweltverträglichkeit auszeichnet und sich insbesondere durch seine gute biologische Abbaubarkeit zum Einsatz als Formtrennmittel bei der Herstellung von Fasern, Folien, Filmen und Formkörpern aus biologisch abbaubaren thermoplastischen Zusammensetzungen eignet.

Insbesondere lag der vorliegenden Erfindung die Aufgabe zugrunde, thermoplastische Zusammensetzungen, insbesondere jedoch hauptsächlich oder ausschließlich auf thermoplastischen Polyestern basierende, thermoplastische Zusammensetzungen anzugeben, die, wenn sie zur Herstellung von Formkörpern, beispielsweise mittels Spritzgießverfahren, eingesetzt werden, leicht von der Oberfläche des Spritzgießwerkzeugs angelöst werden können, wobei die thermoplastische Zusammensetzung möglichst wenige, chemische unterschiedliche Bestandteile beinhaltet und daher auch mit möglichst wenigen Verfahrensschritten kostengünstige hergestellt werden kann.

Darüber hinaus lag der vorliegenden Erfindung die Aufgabe zugrunde, eine thermoplastische Zusammensetzung anzugeben, die eine im Vergleich zu den aus dem Stand der Technik bekannten, thermoplastischen Zusammensetzungen verbesserte Transparenz und auch ein im Vergleich zu den aus dem Stand der Technik bekannten, thermoplastischen Zusammensetzungen verbessertes Ablöseverhalten von der Oberfläche eines Spritzgießwerkzeugs zeigt. Insbesondere sollten bei der Verarbeitung der thermoplastischen Zusammensetzung, insbesondere bei der Herstellung von Formkörpern aus dieser thermoplastischen Zusammensetzung, möglichst weniger, wenn möglich sogar keine Komponenten dieser Zusammensetzung entweichen, so dass die toxikologische Belastung der mit der Herstellung von Formkörpern befassten Personen auf ein Minimum reduziert werden kann.

Der vorliegenden Erfindung lag weiterhin die Aufgabe zugrunde, ein Verfahren anzugeben, mit dem die vorstehend beschriebene, vorteilhafte thermoplastische Zusammensetzung hergestellt werden kann.

Weiterhin lag der vorliegenden Erfindung die Aufgabe zugrunde, ein Verfahren zur Herstellung eines Formkörpers anzugeben, bei dem eine thermoplastische Zusammensetzung nach dem Erhitzen auf eine Temperatur im Bereich der oder oberhalb der Glasübergangstemperatur der thermoplastischen Zusammensetzung in einen Formkörper überfuhrt wird, wobei sich nach dem Erkalten des Formkörpers dieser im Vergleich zu den aus dem Stand der Technik bekannten Formkörpern, insbesondere im Vergleich zu den aus dem Stand der Technik auf thermoplastischen Polyestern basierenden Formkörper, noch besser von den Oberflächen des zur Herstellung des Formkörpers eingesetzten Werkzeugs ablösen lässt.

Auch lag der vorliegenden Erfindung die Aufgabe zugrunde, einen Formkörper, insbesondere einen auf einem thermoplastischen Polyester basierenden Formkörper anzugeben, der im Vergleich zu dem aus dem Stand der Technik bekannten, auf thermoplastischen Polyestern basierenden Formkörpern in kostengünstigerer Weise hergestellt werden kann und möglichst auch eine verbesserte Transparenz aufweist.

Einen Beitrag zur Lösung mindestens einer der eingangs genannten Aufgaben leistet eine thermoplastische Zusammensetzung, wie in den Ansprüchen definiert, beinhaltend
a) ein thermoplastisches Polymer,
b) ein Formtrennmittel, sowie
c) gegebenenfalls weitere Zusatzstoffe,
   wobei das Formtrennmittel einen Ester aus
   - mindestens einer auf zwei oder mehr Glycerin-Einheiten basierenden Alkoholkomponente; und
   - mindestens einer Carbonsäure oder einem Derivat einer Carbonsäure oder beide,
   beinhaltet.

Als Alkoholkomponente kommen bevorzugt verzeigte, unverzweigte oder auch zyklische, jeweils auf 2 bis 4 Glycerin-Einheiten basierenden Alkoholverbindungen in Betracht. Außerdem kommen als Alkoholkomponente Mischungen von 2 oder 3 oder mehreren der vorstehend genannten Alkoholverbindungen in Frage. Unter der Bezeichnung *"thermoplastisches Polymer",* wie sie hierin verwendet wird, werden Kunststoffe verstanden, die sich in einem bestimmten Temperaturbereich einfach (thermo-plastisch) verformen lassen. Dieser Vorgang ist reversibel und kann durch Abkühlung und Wiedererwärmung bis in den schmelzflüssigen Zustand beliebig oft wiederholt werden, solange nicht durch Überhitzung die thermische Zersetzung des Materials einsetzt.

Als weitere thermoplastische Polymere, welche in der erfindungsgemäßen Zusammensetzung enthalten sein können, kommen insbesondere thermoplastische Polyurethanen, thermoplastische Polyester, thermoplastische Polyamide, thermoplastische Polyolefine, thermoplastische Polyvinylester, thermoplastische Polyether, thermoplastische Polystyrole, thermoplastische Polyimide, thermoplastische Schwefelpolymere, thermoplastische Polyacetale, thermoplastische Fluorkunststoffe, thermoplastische Styrol-Olefin-Copolymere, thermoplastische Polyacrylate, thermoplastische Ethylen-Vinylacetat-Copolymere oder Gemische aus zwei oder mehr der vorstehend genannten, thermoplastischen Polymere in Frage.

Es ist jedoch erfindungsgemäß bevorzugt, dass das thermoplastische Polymer zu mehr als 90 Gew.-%, besonders bevorzugt zu mehr als 95 Gew.-%, darüber hinaus noch mehr bevorzugt zu mindestens 99 Gew.-% und am meisten bevorzugt zu 100 Gew.-%, jeweils bezogen auf das Gesamtgewicht des thermoplastischen Polymers, auf dem anspruchsgemäßen thermoplastischen Polyester basiert. Vorzugsweise werden zur Herstellung der in der erfindungsgemäßen Zusammensetzung als Komponente a) enthaltenen, thermoplastischen Polyester als Polyol- bzw. Diol-Komponente Ethylenglykol, 1,3-Propylendiol oder 1,4-Butylendiol verwendet. Erfindungsgemäß besonders bevorzugte, thermoplastische Polyester, die durch Reaktion einer Dicarbonsäure mit einem Diol erhältlich sind, umfassen insbesondere Polyethylenterephthalat (PET), Polypropylenterephthalat (PPT) oder Polybutylenterephthalat (PBT), sowie Mischungen aus mindestens zwei dieser thermoplastischen Polyester.

Diese vorstehend beschriebenen Polyester können gegebenenfalls eine geringe Menge an Einheiten enthalten, die aus anderen Dicarbonsäuren, beispielsweise Isophthalsäure, oder anderen Diolen wie Cyclohexandimethanol, stammen, was im allgemeinen den Schmelzpunkt des Polyesters verringert.

Eine spezielle Gruppe von teilweise aromatischen Polyestern sind sogenannte segmentierte oder Blockcopolyester, die zusätzlich zu den vorstehend genannten Polyestersegmenten (auch "harte Segmente" genannt), sogenannte "weiche Segmente" enthalten. Diese weichen Segmente stammen aus einem flexiblen Polymer; das heißt einem im Wesentlichen amorphen Polymer mit einer niedrigen Glasübergangstemperatur (T_{g}) und geringer Steifigkeit, mit reaktiven Endgruppen, vorzugsweise zwei Hydroxylgruppen. Vorzugsweise liegt die Glasübergangstemperatur dieser "weiche Segmente" unter O°C, besonders bevorzugt unter - 20°C und am meisten bevorzugt unter - 40°C. Im Prinzip können mehrere unterschiedliche Polymere als weiches Segment verwendet werden. Geeignete Beispiele für "weiche Segmente" sind aliphatische Polyether, aliphatische Polyester oder aliphatische Polycarbonate. Die Molmasse der weichen Segmente kann innerhalb breiter Grenzen variieren, liegt aber vorzugsweise zwischen 400 und 6.000 g/mol.

Neben dem anspruchsgemäßen linearen Polyester, der über eine Polykondensationsreaktion von mindestens einer Polycarbonsäure oder einem Ester-bildenden Derivat davon und mindestens einem Polyol erhältlich ist, können in der erfindungsgemäßen, thermoplastischen Zusammensetzung auch thermoplastische Polyester enthalten sein, die durch Polykondensationsreaktion kurzkettiger Hydroxycarbonsäuren oder durch Ringöffnungsreaktion cyclischer Ester erhältlich sind.

Beispiele geeigneter, kurzkettiger Hydroxycarbonsäure, welche zur Herstellung thermoplastischer Polymere eingesetzt werden können, umfassen insbesondere L-Milchsäure, D-Milchsäure, DL-Milchsäure, Glykolsäure, 3-Hydroxybuttersäure, 4-Hydroxybuttersäure, 4-Hydroxyvaleriansäure, 5-Hydroxyvaleriansäure, 6-Hydroxycapronsäure sowie Mischungen dieser Hydroxycarbonsäuren. Beispiele geeigneter cyclischer Ester umfassen insbesondere Glykolid (ein Dimeres von Glykolsäüre) und ε-Caprolacton (ein cyclischer Ester von 6-Hydroxycapronsäure).

Die Herstellung der vorstehend beschrieben, thermoplastischen Polyester ist unter anderem auch in *"*Encyclopedia of Polymer Science and Engineering", Band 12, Seiten 1 bis 75 und Seiten 217 bis 256; John Wiley & Sons (1988) und auch in *"*Ullmann's Encyclopedia of Industrial Chemistry", Band A21, Seiten 227 bis 251, VCH Publishers Inc. (1992) beschrieben. Erfindungsgemäß bevorzugte thermoplastische Polymere sind Polyethylentherephthalat (PET), Polybutylentherephthalt (PBT) und Polymilchsäure (PLA), wobei jeder dieser Polymere für sich in einer bevorzugten Ausgestaltung einer thermoplastischen Zusammensetzung der vorliegenden Erfindung zu mehr als 50 Gew.-%, vorzugsweise mehr als 75 Gew.-% und besonders bevorzugt mehr als 90 Gew.-%, jeweils bezogen auf die thermoplastische Zusammensetzung, enthalten sein kann.

Neben dem thermoplastischen Polymer als Komponente a) umfasst die erfindungsgemäße Zusammensetzung weiterhin als Komponente b) ein Formtrennmittel.

Der Begriff *"Carbonsäure",* wie er hierin verwendet wird, umfasst die Carbonsäure in ihrer protonierten Form, die Carbonsäure in ihrer deprotonierten Form (also insbesondere Salze der Carbonsäure) als auch Mischungen der Carbonsäure in ihrer protonierten Form und ihrer deprotonierten Form. Weiterhin umfasst der Begriff *"Carbonsäure"* grundsätzlich alle Verbindungen, die mindestens eine Carbonsäure-Gruppe aufweisen. Er umfasst daher insbesondere auch Verbindungen, die neben der mindestens einen Carbonsäure-Gruppe auch andere funktionelle Gruppen, wie etwa Hydroxyl-Gruppen, Keto-Gruppen oder Ether-Gruppen, aufweisen. Auch Dicarbonsäuren, Tricarbonsäuren oder Carbonsäuren mit mehr als drei Carboxyl-Gruppen sind von dem Begriff *"Carbonsäuren"* umfasst, wobei jedoch Monocarbonsäuren besonders bevorzugt sind.

Der Begriff *"Derivat einer Carbonsäure"* umfasst alle Derivate einer Carbonsäure, die bei einer Reaktion mit einem Alkohol zu einem entsprechenden Ester der Carbonsäure führen. Insbesondere umfasst von dem Begriff *"Derivat einer Carbonsäure"* sind die Säurechloride der Carbonsäure sowie die Säureanhydride der Carbonsäure. Diese Derivate weisen vorzugsweise eine im Vergleich zur Carbonsäure gesteigerte Reaktivität der Carbonsäure-Gruppe auf, so dass bei einer Umsetzung mit einem Alkohol die Esterbildung begünstigt wird.

Als in der erfindungsgemäßen, thermoplastischen Zusammensetzung als Komponente b) enthaltenes Formtrennmittel werden demnach Formtrennmittel beinhaltend Ester einer Alkoholkomponente und einer Carbonsäure oder einem Derivat einer Carbonsäure eingesetzt, wie in den Ansprüchen definiert. Dabei ist es insbesondere bevorzugt, dass das Formtrennmittel zu mindestens 50 Gew.-%,besonders bevorzugt zu mindestens 60 Gew.-% und am meisten bevorzugt zu mindestens 75 Gew.-%, jeweils bezogen auf das Gesamtgewicht des Formtrennmittels, auf dem vorstehend beschriebenen Ester basiert.

Als Carbonsäure, welche als Esterkomponente des Formtrennmittels b) eingesetzt wird, kommen insbesondere gesättigte oder ungesättigte Carbonsäuren mit einer Anzahl an Kohlenstoffatomen in einem Bereich von 6 bis 26, besonders bevorzugt in einem Bereich von 8 bis 24, noch mehr bevorzugt in einem Bereich von 10 bis 22, darüber hinaus bevorzugt in einem Bereich von 12 bis 20 und am meisten bevorzugt in einem Bereich von 14 bis 18 in Betracht. Erfindungsgemäß insbesondere bevorzugt Carbonsäuren sind daher Fettsäuren.

Beispiele geeigneter Carbonsäuren umfassen insbesondere Capronsäure, Önanthsäure, Caprylsäure, Pelargonsäure, Caprinsäure, Laurinsäure, Myristinsäure, Fischöl, Palmitinsäure, Pelagonsäure, Margarinsäure, Stearinsäure, Isostearinsäure, Arachinsäure, Behensäure, Lignocerinsäure, Cerotinsäure, Undecylensäure, Ölsäure, Elaidinsäure, Vaccensäure, Icosensäure, Rapsöl, Cetoleinsäure, Erucasäure, Nervonsäure, Linolsäure, Linolensäure, Arachidonsäure, Timnodonsäure, Clupanodonsäure oder Cervonsäure.

Weiterhin als geeignete Carbonsäuren umfasst sind auch Hydroxycarbonsäuren, wobei unter diesen Hydroxyfettsäuren, wie beispielsweise Ricinolsäure, 12-Hydroxystearinsäure, hydrierte Kastorölfettsäuren (Fettsäuren, die kleine Mengen von Stearinsäure und Palmitinsäure, ebenso wie 12-Hydroxystearinsäure enthalten), Sabininsäure, 2-Hydroxytetradecansäure, Ipurolinsäure (3,11-Dihydroxytetradecansäure, 2-Hydroxyhexadecansäure, Jalapinolsäure, Juniperinsäure, Ambrettolsäure, Aleuritinsäure, 2-Hydroxyoctadecansäure, 18-Hydroxyoctadecansäure, 9,10-Dihydroxyoctadecansäure, Kamiolensäure, Ferronsäure, Cerebronsäure, 9-Hydroxystearinsäure und 10-Hydroxystearinsaure besonders bevorzugt und 12-Hydroxystearinsäure und Ricinolsäure am meisten bevorzugt sind.

Die vorstehend genannten Carbonsäuren können einzeln oder als Carbonsäuremischungen zur Herstellung der Ester eingesetzt werden, wobei insbesondere der Einsatz natürlicher Fettsäuremischungen besonders bevorzugt ist.

Als Alkoholkomponente grundsätzlich alle dem Fachmann bekannten auf zwei oder mehr Glycerin-Einheiten basierenden Verbindungen in Betracht. Als Alkoholkomponente eignen sich insbesondere eine oder mehrere Verbindungen der Strukturen I oder II oder Mischungen davon. Im Zusammenhang mit diesen Strukturen wird auf die vorstehenden Ausführungen Bezug gekommen.

Die Alkoholkomponente des erfindungsgemäßen Esters umfasst demnach Diglycerine, Triglycerine, Tetraglycerine oder eine Mischung daraus. Diese können durch Kondensation von mehr als vier Glycerin-Molekülen erhalten werden. Derartige Di-, Tri-, oder Tetraglycerine können durch dem Fachmann bekannte Verfahren, insbesondere jedoch durch Basen- oder Säure-katalysierte Kondensation von Glycerin erhalten werden.

Die Herstellung der als Formtrennmittel oder als Bestandteil des Formtrennmittels eingesetzten Ester aus einer Carbonsäure und einer anspruchsgemäßen Alkoholkomponente kann durch jedes dem Fachmann bekannte Verfahren zur Herstellung eines solchen Esters erfolgen, insbesondere jedoch durch die Umsetzung der Carbonsäure mit der anspruchsgemäßen Alkoholkomponente oder aber durch die Umsetzung der Carbonsäure mit Glycidol.

Sofern die Herstellung der Ester durch die Umsetzung der Carbonsäure mit der Alkoholkomponente der Struktur I bzw. II erfolgt, so werden beide Komponente vorgelegt und anschließend in Gegenwart eines geeigneten Veresterungskatalysators katalysiert. Als Veresterungskatalysatoren können Säuren, wie beispielsweise Schwefelsäure oder p-Toluolsulfonsäure, oder Metalle und deren Verbindungen eingesetzt werden. Geeignet sind beispielsweise Zinn, Titan, Zirkonium, die als feinverteilte Metalle oder zweckmäßig in Form ihrer Salze, Oxide oder löslichen organischen Verbindungen verwendet werden. Die Metallkatalysatoren sind im Gegensatz zu Protonensäuren Hochtemperaturkatalysatoren, die ihre volle Aktivität in der Regel erst bei Temperaturen oberhalb 180°C erreichen. Sie sind jedoch erfindungsgemäß bevorzugt, weil sie im Vergleich zur Protonenkatalyse weniger Nebenprodukte, wie beispielsweise Olefine, liefern. Erfindungsgemäß besonders bevorzugte Veresterungskatalysatoren sind eine oder mehrere zweiwertige Zinnverbindungen oder Zinnverbindungen bzw. elementares Zinn, die sich mit den Edukten zu zweiwertigen Zinnverbindungen umsetzen können. Beispielsweise kann als Katalysator Zinn, Zinn(II)chlorid, Zinn(II)sulfat, Zinn(II)alkoholate oder Zinn(II)salze von organischen Säuren, insbesondere von Mono- und Dicarbonsäureh. Besonders bevorzugte Zinnkatalysatoren sind Zinn(II)oxalat und Zinn(II)benzoat.

Die Durchführung der Veresterungsreaktion zwischen der Carbonsäure und der anspruchsgemäßen Alkoholkomponente kann durch dem Fachmann bekannte Verfahren erfolgen. Dabei kann es insbesondere vorteilhaft sein, dass bei der Reaktion gebildete Wasser aus dem Reaktionsgemisch zu entfernen, wobei dieses Entfernen des Wassers vorzugsweise durch Destillation, gegebenenfalls durch Destillation mit im Überschuss eingesetzten Alkohol erfolgt. Auch kann nach Durchführung der Veresterungsreaktion nicht reagierter Alkohol aus dem Reaktionsgemisch entfernt werden, wobei auch diese Entfernung des Alkohols vorzugsweise mittels Destillation erfolgt. Weiterhin kann nach Beendigung der Veresterungsreaktion, insbesondere nach der Abtrennung von nicht umgesetztem Alkohol der im Reaktionsgemisch zurückbleibende Katalysator, gegebenenfalls nach Behandlung mit einer Base, durch eine Filtration oder durch Zentrifugieren abgetrennt werden.

Weiterhin ist es bevorzugt, die Veresterungsreaktion zwischen der Carbonsäure und der anspruchsgemäßen Alkoholkomponente bei einer Temperatur in einem Bereich von 50 bis 300°C, besonders bevorzugt in einem Bereich von 100 bis 280°C, am meisten bevorzugt in einem Bereich von 150 bis 270°C und weiterhin bevorzugt in einem Bereich von 200 bis 250°C durchzuführen. Die optimalen Temperaturen hängen von dem/den Einsatzalkohol(en), dem Reaktionsfortschritt, der Katalysatorart und der Katalysatorkonzentration ab. Sie können für jeden Einzelfall durch Versuche leicht ermittelt werden. Höhere Temperaturen erhöhen die Reaktionsgeschwindigkeiten und begünstigen Nebenreaktionen, wie beispielsweise Wasserabspaltung aus Alkoholen oder Bildung farbiger Nebenprodukte. Die gewünschte Temperatur oder der gewünschte Temperaturbereich kann durch den Druck im Reaktionsgefäss (leichter Überdruck, Normaldruck oder gegebenenfalls Unterdruck) eingestellt werden.

Sofern die Herstellung des Esters durch die Umsetzung einer Carbonsäure mit Glycidol erfolgt, ist es ebenfalls bevorzugt, diese Veresterung in Gegenwart geeigneter Katalysatoren durchzuführen, wobei in diesem Fall insbesondere auf Phosphorsäure basierende, saure Katalysatoren bevorzugt sind. Solche Katalysatoren umfassen insbesondere Phosphorsäuren oder Ester davon. Als Beispiele geeigneter Katalysatoren seien insbesondere Phosphorsaure, Phosphorsäureanhydrid, Polyphosphorsäure, Orthophosphorsäure, Metaphosphorsäure, Pyrophosphorsäure, Triphosphorsäure und Tetraphosphorsäure sowie saure Phosphorsäureester, wie etwa Methylsäurephosphat , Ethylsäurephosphat, Isopropylsäurephosphat, Butylsäurephosphat und 2-Ethylhexylsaurephosphat. Auch Monoesteverbindungen, Diesterverbindungen und Mischungen können verwendet werden.

Weitere Einzelheiten zur Herstellung von Ester durch Umsetzung von Fettsäuren mit Glycidol können unter anderem auch der EP-A-0 758 641 entnommen werden.

Weiterhin können auch Mischungen aus verschiedenen Estern, die jeweils durch Veresterung einer Carbonsäure mit einem Alkohol bzw. einem Glycidol erhalten werden können, oder aber Mischungen aus mindestens einem Ester, der durch Veresterung einer Carbonsäure mit einem Alkohol und mindestens einem weiteren Ester, der durch Veresterung einer Carbonsäure mit Glycidol erhalten werden kann, als Formtrennmittel oder Bestandteil eines Formtrennmittels eingesetzt werden. Auch Mischungen aus verschiedenen Estern, die sich hinsichtlich ihrer Carbonsäurekomponente unterscheiden, können als Formtrennmittel oder als Bestandteil des Formtrennmittels eingesetzt werden.

Gemäß einer besonders bevorzugten Ausführungsform der erfindungsgemäßen, thermoplastischen Zusammensetzung beinhaltet das als Komponente b) enthaltene Formtrennmittel ein Ester aus einer Carbonsäure, vorzugsweise aus einer Fettsäure, und Diglycerin, Triglycerin oder Tetraglycerin.

Weiterhin ist es im Zusammenhang mit dem als Formtrennmittel oder Bestandteil des Formtrennmittels (komponente b) eingesetzten Ester aus einer Carbonsaure und der Alkoholkomponente der Struktur I bzw. II bevorzurgt, dass nicht alle Hydroxyl-Gruppen des Alkohols verestert sind, sondern dass ein Teil der HydroxylGruppen unverestert bleibt. In diesem Zusammenhang ist es insbesondere bevorzugt, dass die Hydroxyl-Gruppen des Alkohols zu mindestens 5 Mol-%, besonders bevorzugt zu mindestens 10 Mol-%, noch mehr bevorzugt zu mindestens 20 Mol-%, darüber hinaus bevorzugt zu mindestens 30 Mol-%, darüber hinaus bevorzugt zu mindestens 40 Mol-% und am meisten bevorzugt zu mindestens 50 Mol-% nicht mit der Carbonsäure-Gruppe der Carbonsäure verestert sind. Die Formulierung *"zu mindestens 5 Mol-% nicht mit der Carbonsäure-Gruppe der Carbonsäure verestert"* soll dabei ausdrücken, dass in dem in der erfindungsgemäßen Zusammensetzung enthaltenen Formtrennmittel mindestens 5 Mol-% aller zur Herstellung des Formtrennmittels aus einer Carbonsäure und der Alkoholkomponente der Struktur I bzw. II in der Alkoholkomponente der Struktur I bzw. II ursprünglich vorhandenen Hydroxyl-Gruppen nicht verestert sind und daher auch im fertigen Formtrennmittel noch als Hydroxyl-Gruppe vorliegen.

Weiterhin können in der erfindungsgemäßen, thermoplastischen Zusammensetzung neben dem thermoplastischen Polymer (Komponente a) und dem Formtrennmittel (Komponente b) gegebenenfalls auch weitere Zusatzstoffe enthalten sein. Zu den weiteren Zusatzstoffen gehören insbesondere Schlagzähigkeitsmodifikatoren, Füllstoffmaterialien, Verstärkungsmittel, Flammverzögerungsverbindungen, Wärme- und UV-Stabilisatoren, Antioxidationsmittel, andere Verarbeitungshilfsmittel, Keimbildner, Farbstoffe und Antitropfmittel. Beispiele geeigneter Schalgzähigkeitsmodifikatoren, Füllstoffmaterialien, Verstärkungsmittel und Flammverzögerungsverbindungen sind unter anderem der US 2005/0234171 A1 zu entnehmen.

Weiterhin ist es im Zusammenhang mit der erfindungsgemäßen, thermoplastischen Zusammensetzung bevorzugt, dass die thermoplastische Zusammensetzung
al) 60 bis 99,99 Gew.-%, besonders bevorzugt 80 bis 99,8 Gew.-% und am meisten bevorzugt 90 bis 99,6 Gew.-% des thermoplastischen Polymers,
b1) 0,01 bis 20 Gew.-%, besonders bevorzugt 0,1 bis 10 Gew.-% und am meisten bevorzugt 0,2 bis 5 Gew.-% des Formtrennmittels und
c1) 0 bis 20 Gew.-%, besonders bevorzugt 0,1 bis 10 Gew.-% und am meisten bevorzugt 0,2 bis 5 Gew.-% der weiteren Zusatzstoffe,
jeweils bezogen auf das Gesamtgewicht der thermoplastischen Zusammensetzung, enthält, wobei die Summe der Komponenten a1) bis c1) 100 Gew.-% beträgt.

In einer anderen erfindungsgemäßen Ausgestaltung ist es bevorzugt, dass die thermoplastische Zusammensetzung
a2) 1 bis 69,99 Gew.-%, besonders bevorzugt 1,5 bis 49,8 Gew.-% und am meisten bevorzugt 2 bis 19,6 Gew.-% des thermoplastischen Polymers,
b2) 0,01 bis 20 Gew.-%, besonders bevorzugt 0,1 bis 10 Gew.-% und am meisten bevorzugt 0,2 bis 5 Gew.-% des Formtrennmittels,
c2) mindestens 10 Gew.-%, vorzugsweise mindestens 20 Gew.-% und besonders bevorzugt mindestens 30 Gew.-% einer biologisch abbaubaren Füllkomponente und
d2) 0 bis 20 Gew.-%, besonders bevorzugt 0,1 bis 10 Gew.-% und am meisten bevorzugt 0,2 bis 5 Gew.-% der weiteren Zusatzstoffe,
jeweils bezogen auf das Gesamtgewicht der thermoplastischen Zusammensetzung, enthält, wobei die Summe der Komponenten a2) bis d2) 100 Gew.-% beträgt. Als biologisch abbaubare Füllkomponente kommen grundsätzlich alle dem Fachmann bekannten und geeignet erscheinenden in Betracht. Hierunter fallen insbesondere Ein- und Mehrfachzucker wie Stärke und Stärkederivate, Cellulose und Cellulosederivate, Hanf, Jute, Bast, Schilf, Reet, insbesondere Reetmehl, und andere aus Pflanzen gewonnene Stoffe oder eine Kombination aus mindestens zwei davon. Im Rahmen dieser Ausgestaltung ist es weiterhin bevorzugt, dass das thermoplastische Polymer zum mindestens 10 Gew.-%, vorzugsweise zu mindestens 50 Gew.-% und besonders bevorzugt zu mindestens 75 Gew.-%, jeweils bezogen auf das thermoplastische Polymer, auf einem aus nachwachsenden Rohstoffen erzeugbaren Monomer wie Milchsäure basiert. Diese thermoplastische Zusammensetzung eignet sich insbesondere für biologisch abbaubare Einweg- und Wegwerfartikel wie Geschirr oder Besteck.

Gemäß einer besonders Ausführungsform der erfindungsgemäßen, thermoplastischen Zusammensetzung ist es bevorzugt, wenn diese weniger als 0,001 Gew.-%, besonders bevorzugt weniger als 0,0005 Gew.-% und am meisten bevorzugt weniger als 0,0001 Gew.-% eines gesättigten, α-olefinischen Oligomers aus mindestens einem C₆-C₁₈ α-Olefin enthält.

Einen Beitrag zur Lösung mindestens eines Teils der eingangs genannten Aufgabe leistet weiterhin ein Verfahren zur Herstellung einer thermoplastischen Zusammensetzung beinhaltend
a) ein thermoplastisches Polymer, wie in den Ansprüchen definiert,
b) ein Formtrennmittel, wie in den Ansprüchen definiert, sowie
c) gegebenenfalls weitere Zusatzstoffe,
beinhaltend die Verfahrensschritte:
i) Bereitstellen eines thermoplastischen Polymers, wie in den Ansprüchen definiert oder einer Vorstufe des thermoplastischen Polymers;
ii) Bereitstellen des Formtrennmittels, wie in den Ansprüchen definiert, beinhaltend einen Ester basierend mindestens auf
   - einer auf zwei oder mehr Glycerin-Einheiten basierenden Alkoholkomponente; und
   - mindestens einer Carbonsäure oder einem Derivat einer Carbonsäure oder beiden;
iii) gegebenenfalls Bereitstellen weiterer Zusatzstoffe;
iv) Vermischen der Komponenten i), ii) und gegebenenfalls iii).

Als thermoplastische Polymer, Formtrennmittel und weitere Zusatzstoffe sind diejenigen thermoplastischen Polymere, Formtrennmittel und weiteren Zusatzstofbevorzugt, die bereits eingangs im Zusammenhang mit der erfindungsgemäßen, thermoplastischen Zusammensetzung als bevorzugte thermoplastische Polymer, Formtrennmittel und weitere Zusatzstoffe genannt worden sind.

Diese Komponenten werden zunächst in den Verfahrensschritten i), ii) und gegebenenfalls iii) bereitgestellt. Sodann erfolgt im Verfahrensschritt iv) des erfindungsgemäßen Verfahrens das Vermischen der Komponenten i), ii) und gegebenenfalls iii).

Das Vermischen der Komponenten i), ii) und gegebenenfalls iii) kann dabei unter Nutzung bekannter Techniken erfolgen. So kann das Vermischen beispielsweise ein Trockenmischvorgang sein, bei dem die verschiedenen Komponenten unterhalb der Schmelzverarbeitungstemperatur des thermoplastischen Polymers gemischt werden, oder aber ein Schmelzmischverfahren, bei dem die Komponenten, gegebenenfalls vorgemischt und bei den Schmelzverarbeitungstemperaturen des thermoplastischen Polymers gemischt werden. Zu den Schmelzmischverfahren gehört insbesondere das erfindungsgemäß bevorzugte Schmelzkentverfahren, welches beispielsweise durch kontinuierliches Schmelzkneten unter Verwendung einer Einschnecken-Knetmaschine, einer Doppelschnecken-Knetmaschine vom Verzahnungs-gleiche-Richtungs-Rotationstyp, Verzahnungs-verschiedene-Richtungs-Rotationstyp, Nichtverzahnungs-gleiche-Richtungs-Rotationstyp, Nichtverzahnungs-verschiedene-Richtungs-Rotationstyp, oder anderer Typen oder durch Batch-Schmelzkneten unter Verwendung einer Walzenknetmaschine, einer Banbury-Knetmaschine oder ähnlichem realisierbar ist. Denkbar ist weiterhin eine Kombination aus einem Trockenmischverfahren und einem Schmelzmischverfahren.

Weiterhin ist die Reihenfolge und die Art und Weise der Zugabe der einzelnen Komponenten i), ii) und gegebenenfalls iii) in die Mischvorrichtung grundsätzlich unkritisch. So können beispielsweise zunächst das thermoplastische Polymer und gegebenenfalls die Zusatzstoffe in der Mischvorrichtung vorgelegt und erst anschließend das Formtrennmittel zugesetzt werden. Denkbar ist auch, das Formtrennmittel oder einen Teil des Formtrennmittels zunächst mit einer oder mehreren anderen Komponenten der erfindungsgemäßen, thermoplastischen Zusammensetzung, beispielsweise mit einem oder mehreren Zusatzstoffen, zu vermischen und diese Mischung dann entweder zu dem bereits in der Mischvorrichtung befindlichen, thermoplastischen Polymer zuzugeben oder aber diese Mischung zunächst in der Mischvorrichtung vorzulegen und erst dann das thermoplastische Polymer zuzusetzen.

In weiteren Ausgestaltungen des erfindungsgemäßen Verfahrens zur Herstellung einer thermoplastischen Zusammensetzung erfolgt das Vermischen nach mindestens einer der nachfolgenden Maßnahmen:
M1) bei der Glasübergangstemperatur des thermoplastischen Polymers oder bei einer Temperatur oberhalb der Glasübergangstemperatur des thermoplastischen Polymers;
M2) wobei das Formtrennmittel flüssiger ist als das thermoplastische Polymer; oder
M3) wobei mindestens ein Teil des Formtrennmittels dem Vorläufer des thermoplastischen Polymers zugesetzt wird.

Es entspricht weiterhin erfindungsgemäßen Ausgestaltungen, wenn zwei oder mehrere der vorstehenden Maßnahmen kombiniert werden. So ergeben sich im Einzelnen als Ausgestaltungen die folgenden, anhand der Ziffemkombinationen dargestellten Maßnahmenkombinationen: M1M2, M1M3, M2M3 und M1M2M3.

Gemäß einer bevorzugten Ausführungsform M1 des erfindungsgemäßen Verfahrens erfolgt das Vermischen der Komponenten i), ii) und gegebenenfalls iii) im Verfahrensschritt iv) des erfindungsgemäßen Verfahrens durch ein Schmelzmischverfahren. In diesem Zusammenhang ist es insbesondere bevorzugt, dass das Vermischen im Verfahrensschritt iv) bei der Glasübergangstemperatur des thermoplastischen Polymers oder bei einer Temperatur oberhalb der Glasübergangstemperatur des thermoplastischen Polymers erfolgt. Besonders bevorzugt ist es in diesem Zusammenhang, dass das Vermischen bei einer Temperatur in einem Bereich von 5 Grad unterhalb der Glasübergangstemperatur (T_{g}) bis 200°C oberhalb der Glasübergangstemperatur des eingesetzten, thermoplastischen Polymers, besonders bevorzugt bei einer Temperatur in einem Bereich von 1 Grad unterhalb der Glasübergangstemperatur (t_{g}) bis 180°C oberhalb der Glasübergangstemperatur des eingesetzten, thermoplastischen Polymers und am meisten bevorzugt bei einer Temperatur in einem Bereich von 1 Grad oberhalb der Glasübergangstemperatur (T_{g}) bis 150°C oberhalb der Glasübergangstemperatur des eingesetzten, thermoplastischen Polymers, wobei jedoch die obere Grenze des Temperaturbereiches im Wesentlichen von der Zersetzungstemperatur des eingesetzten, thermoplastischen Polymers begrenzt wird. Ferner entspricht es erfindungsgemäßen Ausgestaltungen, wenn das Vermischen bei Temperaturen in einem Bereich von 10 bis 180°C und vorzugsweise 50 bis 150°C oberhalb der Glasübergangstemperatur des eingesetzten, thermoplastischen Polymers erfolgt.

In der erfindungsgemäßen Ausgestaltung M2, in der das Formtrennmittel flüssiger ist als das thermoplastische Polymer, ist es bevorzugt, das Formtrennmittel bei einer Temperatur einzusetzen, bei der dieses flüssig und das thermoplastische Polymer noch nicht flüssig ist. Bevorzugt liegt hier die Temperatur des thermoplastischen Polymers unterhalb der Glasübergangstemperatur dieses Polymers. So ist es bevorzugt, wenn sich die Schmelztemperatur des Formtrennmittels und die Glasübergangstemperatur des thermoplastischen Polymers um mindestens 5°C, vorzugsweise mindestens 10°C und besonders bevorzugt mindestens 30°C unterscheiden. Weiterhin ist es in dieser Ausgestaltung und auch allgemein bevorzugt, das thermoplastische Polymer als Granulat einzusetzen. Im Allgemeinen kommen alle dem Fachmann bekannten Granulatformen mit kugelartiger oder zylinderartiger Raumform auch vorliegend in Betracht. Die mittels Siebanalyse bestimmte Granulatgröße liegt für mindestens 70 Gew.-% der Granulatteilchen in einem Bereich von 0,01 bis 5 cm und vorzugsweise in einem Bereich von 0,1 bis 4 cm. Durch die Vorgehensweise gemäß dieser Ausgestaltung können die Oberflächen der Granulatteilchen mindestens teilweise mit dem erfindungsgemäßen Formtrennmittel überzogen werden, so dass ein mindestens teilweise gecoatetes thermoplastisches Polymergranulat erhalten wird. Dieses erlaubt eine möglichst homogene Verteilung des erfindungsgemäßen Formtrennmittels in der thermoplastischen Zusammensetzung, insbesondere wenn diese als Formulierung für die später erfolgende Extrudierung konfektioniert wird.

In der erfindungsgemäßen Ausgestaltung M3, in der das Formtrennmittel dem Vorläufer des thermoplastischen Polymers zugesetzt wird, kommen Formtrennmittel in flüssiger und auch in fester Form in Betracht. Als Vorläufer des thermoplastischen Polymers kommen grundsätzlich alle dem Fachmann bekannten Vorstufen vor dem Erhalt des thermoplastischen Polymers in betracht. Hierunter fallen insbesondere Vorstufen, die ein geringeres Molekulargewicht als das endgültige thermoplastische Polymer aufweisen. Hierbei ist es bevorzugt, dass das Molekulargewicht des Vorläufers sich von dem des fertigen thermoplastischen Polymers um mindestens das 1,1-, vorzugsweise mindestens das 1,5- und besonders bevorzugt mindestens um das 2-Fache unterscheidet. Neben den zur Herstellung des thermoplastischen Polymers eingesetzten Monomeren und Oligomeren, die vorzugsweise aus 2 bis 100 Monomeren bestehen, gehört, insbesondere bei Polykondensaten, ein Vorpolymer, das, meist durch Hitzebehandlung, zu dem fertigen thermoplastischen Polymer auspolymerisiert wird. Vorzugsweise basiert das Vorpolymer auf mehr als 100 Monomeren als Wiederholungseinheiten, wobei die Zahl der Monomere als Wiederholungseinheiten und damit das endgültige Molekulargewicht des fertigen thermoplastischen Polymers nicht erreicht wird. Somit ist es besonders bevorzugt, das erfindungsgemäße Formtrennmittel jeweils den Monomeren, Oligomeren oder dem Vorpolymer oder mindestens zwei von diesen zuzusetzen. Hierdurch wird neben einer homogenen Verteilung des erfindungsgemäßen Formtrennmittels auch, meist durch die bei der Polymerisation oder Auspolymerisation herrschenden Bedingungen, eine Einarbeitung des Formtrennmittels durch chemische Bindungen mit dem thermoplastischen Polymer erreicht.

Sofern die im Verfahrensschritt iv) im Falle eines Schmelzmischverfahrens erhaltene, erhitzte Zusammensetzung nicht unmittelbar der Formkörperherstellung zugeführt wird, kann das Verfahren auch noch den weiteren Verfahrensschritt v) umfassen:
v) Abkühlen der thermoplastischen Zusammensetzung, vorzugsweise auf eine Temperatur in einem Bereich von 10 bis 30°C und besonders bevorzugt auf 15 bis 25°C.

Weiterhin kann die thermoplastische Zusammensetzung, welche im Verfahrensschritt iv) erhalten wurde, vor, während oder auch nach Durchführung des Verfahrensschrittes v), gegebenenfalls jedoch auch nach dem Verfahrensschritt iv) und ohne Durchführung des Verfahrensschrittes v) noch einer Granulierung zugeführt werden.

Weiterhin ist es im Zusammenhang mit dem erfindungsgemäßen Verfahren bevorzugt, dass die Komponenten a) bis c) in solchen relativen Mengen miteinander vermischt werden, dass die durch das Vermischen der Komponenten a) bis c) erhaltene, thermoplastische Zusammensetzung
a1) 60 bis 99,99 Gew.-%, besonders bevorzugt 80 bis 99,8 Gew.-% und am meisten bevorzugt 90 bis 99,6 Gew.-% des thermoplastischen Polymers,
b1) 0,01 bis 20 Gew.-%, besonders bevorzugt 0,1 bis 10 Gew.-% und am meisten bevorzugt 0,2 bis 5 Gew.-% des Formtrennmittels, und
c1) 0 bis 20 Gew.-%, besonders bevorzugt 0,1 bis 10 Gew.-% und am meisten bevorzugt 0,2 bis 5 Gew.-% der weiteren Zusatzstoffe,
jeweils bezogen auf das Gesamtgewicht der thermoplastischen Zusammensetzung, enthält, wobei die Summe der Komponenten a1) bis c1) 100 Gew.-% beträgt.

In einer anderen erfindungsgemäßen Verfahrensausgestaltung ist es bevorzugt, dass die Komponenten a2) bis d2) in solchen relativen Mengen miteinander vermischt werden, dass die durch das Vermischen der Komponenten a2) bis d2) erhaltene, thermoplastische Zusammensetzung
a2) 1 bis 69,99 Gew.-%, besonders bevorzugt 1,5 bis 49,8 Gew.-% und am meisten bevorzugt 2 bis 19,6 Gew.-% des thermoplastischen Polymers,
b2) 0,01 bis 20 Gew.-%, besonders bevorzugt 0,1 bis 10 Gew.-% und am meisten bevorzugt 0,2 bis 5 Gew.-% des Formtrennmittels,
c2) mindestens 10 Gew.-%, vorzugsweise mindestens 20 Gew.-% und besonders bevorzugt mindestens 30 Gew.-% einer biologisch abbaubaren Füllkomponente und
d2) 0 bis 20 Gew.-%, besonders bevorzugt 0,1 bis 10 Gew.-% und am meisten bevorzugt 0,2 bis 5 Gew.-% der weiteren Zusatzstoffe,
jeweils bezogen auf das Gesamtgewicht der thermoplastischen Zusammensetzung, enthält, wobei die Summe der Komponenten a2) bis d2) 100 Gew.-% beträgt.

Erfindungsgemäß bevorzugt ist es darüber hinaus, dass im Verlaufe des erfndungsgemäßen Verfahrens zur Herstellung einer thermoplastischen Zusammensetzung ein gesättigtes, α-olefinisches Oligomer aus mindestens einem C₆-C₁₈ α-Olefin in höchstens einer solchen Menge eingesetzt wird, dass die durch das Vermischen der Komponenten a1) bis c1) bzw. a2) bis d2) erhaltene, thermoplastische Zusammensetzung weniger als 0,001 Gew.-%, besonders bevorzugt weniger als 0,0005 Gew.-% und am meisten bevorzugt weniger als 0,0001 Gew.% des gesättigten, α-olefinischen Oligomers enthält.

Einen Beitrag zur Lösung der eingangs genannten Aufgaben leistet weiterhin die durch das vorstehend beschriebene Verfahren erhältliche, thermoplastische Zusammensetzung. Hier und allgemein ist es bevorzugt, dass die thermoplastische Zusammensetzung eine Vergilbungsindex von kleiner als 6,64, vorzugsweise kleiner 6, besonders bevorzugt kleiner 5 sowie ferner bevorzugt kleiner 4,9 und darüber hinaus bevorzug kleiner 4,7 zeigt. Der Vergilbungsindex wird durch den Gelbwert ermittelt, der als b*-Wert gemäß dem L*,a*,b*-Farbsystem einer Probe der zu untersuchenden Zusammensetzung nach DIN 5033 gemessen wird. Oftmals liegt der Vergilbungsindex nicht unter 2 oder 3.

Einen Beitrag zur Lösung mindestens eines Teils der eingangs genannten Aufgabe leistet auch ein Verfahren zur Herstellung eines auf einer thermoplastischen Zusammensetzung basierenden Formkörpers, umfassend die Verfahrensschritte:
I) Bereitstellen einer erfindungsgemäßen, thermoplastischen Zusammensetzung;
II) Erhitzen der thermoplastischen Zusammensetzung auf die Glasübergangstemperatur des thermoplastischen Polymers oder auf einer Temperatur oberhalb der Glasübergangstemperatur des thermoplastischen Polymers;
III) Herstellung eines Formkörpers aus der im Verfahrensschritt II) hergestellten, erhitzten, thermoplastischen Zusammensetzung.

Im Schritt I) des erfindungsgemäßen Verfahrens zur Herstellung eines Formkörpers wird zunächst eine erfindungsgemäße, thermoplastische Zusammensetzung bereitgestellt, wobei diese Bereitstellung vorzugsweise durch ein Verfahren umfassend die Verfahrensschritte i), ii), iv) und gegebenenfalls iii) und/oder v) erfolgt.

Sodann wird im Verfahrensschritt II) die thermoplastische Zusammensetzung auf die Glasübergangstemperatur des thermoplastischen Polymers oder auf einer Temperatur oberhalb der Glasübergangstemperatur des thermoplastischen Polymers erhitzt. In diesem Zusammenhang ist es wiederum bevorzugt, dass das Erhitzen der thermoplastischen Zusammensetzung auf eine Temperatur in einem Bereich von 5 Grad unterhalb der Glasübergangstemperatur (t_{g}) bis 100°C oberhalb der Glasübergangstemperatur des eingesetzten, thermoplastischen Polymers, besonders bevorzugt auf eine Temperatur in einem Bereich von 1 Grad unterhalb der Glasübergangstemperatur (T_{g}) bis 50°C oberhalb der Glasübergangstemperatur des eingesetzten, thermoplastischen Polymers und am meisten bevorzugt auf eine Temperatur in einem Bereich von 1 Grad oberhalb der Glasübergangstemperatur (T_{g}) bis 20°C oberhalb der Glasübergangstemperatur des eingesetzten, thermoplastischen Polymers erfolgt, wobei jedoch auch hier die obere Grenze des Temperaturbereiches im wesentlichen von der Zersetzungstemperatur des eingesetzten, thermoplastischen Polymers begrenzt wird.

Grundsätzlich können die Verfahrensschritte I) und II) zeitgleich oder hintereinander durchgeführt werden. Eine gleichzeitige Durchführung der Verfahrensschritte I) und II) ist beispielsweise dann sinnvoll, wenn die thermoplastische Zusammensetzung mittels eines Schmelzmischverfahrens hergestellt wird. Hier kann es gegebenenfalls vorteilhaft sein, die durch das Schinelzmischverfahren hergestellte Zusammensetzung unmittelbar in einen Formkörper zu überführen. Eine nacheinander erfolgende Durchführung der Verfahrensschritte I) und II) ist beispielsweise dann sinnvoll, wenn die thermoplastische Zusammensetzung mittels eines Trockenmischverfahrens hergestellt wird oder aber wenn die thermoplastische Zusammensetzung zwar mittels eines Schmelzmischverfahrens hergestellt wird, jedoch nicht unmittelbar nach der Herstellung der Bildung eines Formkörpers unterzogen wird sonderen vielmehr zunächst gemäß dem Verfahrensschritt v) abgekühlt wird.

Im Verfahrensschritt III) des erfindungsgemäßen Verfahrens zur Herstellung eines Formkörpers wird aus der im Verfahrensschritt II) hergestellten, erhitzten, thermoplastischen Zusammensetzung ein Formkörper hergestellt. Als Verfahren zur Herstellung eines Formkörpers kommen insbesondere das Spritzgießen, das Extrusionsformen, das Kompressionsformen, das Schichtformen, das Laminierungsformen, das Hohlformen, das Vakuumformen und das Transferformen in Betracht, wobei das Spritzgießen besonders bevorzugt ist.

Weiterhin entspricht es einer Ausgestaltung des erfindungsgemäßen Verfahrens zur Herstellung eines thermoplastischen Formkörpers, dass in mindestens einem weiteren Verfahrensschritt IV) mindestens ein Teilbereich des in Verfahrensschritt III) erhaltenen Formkörpers als Formkörperrohling dient und in seinem Massequerschnitt gegenüber verringert wird. Bei dem Massequerschnitt handelt es sich um den Querschnitt eines Bereiches des Formkörpers, der massiv aus der erfindungsgemäßen thermoplastischen Formmasse besteht. Beispielsweise bei Behältern oder Gebinden stellt der Massequerschnitt die Dicke eine Wandung dieser Behälter oder Gebinde dar. Bei eher faden- oder strangförmig ausgebildeten Formkörpern stellt der Massequerschnitt die Dicke dieser Fäden oder Stränge dar Bei eher flächigen Gebilden wie Platten, Lagen, Bahnen, Filmen oder Folien stellt der Massequerschnitt die Stärke dieser flächigen Gebilde dar. Für das Verringern des Massequerschnitts kommen grundsätzlich alle dem Fachmann hierzu bekannten und geeigneten Methoden in Betracht. Hierunter fallen beispielsweise das Strecken in eine oder zwei Richtungen, Ziehen in eine oder zwei Richtungen, Schleudern oder Blasen, die jeweils vorzugsweise bei erhöhten Temperaturen erfolgen, bei denen die erfindungsgemäße thermoplastische Zusammensetzung so weich oder gar flüssig ist, dass ein Strecken, Ziehen Schleudern oder Blasen erfolgen kann. Der Teilbereich, in dem die Querschnittsverringerung erfolgt, macht vorzugsweise mindestens 50% und besonders bevorzugt mindesten 80% des in Schritt III) erhaltenen Formkörpers aus. Allgemein erfolgt das Strecken oder Ziehen, wenn aus dem in Schritt III) erhaltenen Formkörper eine Faser erhalten werden soll. Bei der Herstellung von Folien kann zum einen das Ziehen oder Strecken in eine oder mehrer Dimensionen erfolgen. So kann die aus einem Extruder laufende Bahn mit einer im Vergleich zu der Austrittsgeschwindigkeit aus dem Extruder höheren Geschwindigkeit auf eine Rolle gezogen werden. Soll hingegen ein Behälter oder Gebinde erhalten werden, so wird außer dem Strecken, Ziehen und Schleudern vornehmlich das Blasen in Schritt IV) eingesetzt. Hierbei erfolgt die Massequerschnittsverringerung durch das anlegen eines Gasdrucks. Der Gasdruck wird allgemein so gewählt, dass die meist mindestens auf Glasübergangstemperatur erhitzte thermoplastische Zusammensetzung des in Schritt III) erhaltenen Formkörper gedehnt werden kann. In der Regel wird die Dehnung durch die Verwendung eines die Endform des Formkörpers habende Form begrenzt. So lässt sich neben Behältern wie Gefrierboxen, Schalen und Verpackungen für Lebensmittel wie Obst, Gemüse oder Fleisch sowie Arzneimittel als Tabletten, Kapseln, Zäpfchen oder Pulvern auch Gebinde für Flüssigkeiten herstellen. Diese Flüssigkeitsgebinde können neben für Flüssigkeiten der kosmetischen oder pharmazeutischen Industrie in der Lebensmittelindustrie, vorzugsweise in der Getränkeindustrie auch als Flaschen, besonders bevorzugt als Mehrweggebinde wie PET-Flaschen eingesetzt werden. Es weiterhin möglich, dass zwei oder mehrere der Verfahrenschritte I) bis IV) durch weitere Verfahrensschritte ergänzt werden und/oder zumindest zeitlich überlappende verlaufen. Dieses gilt insbesondere für die Verfahrensschritte III) und IV).

Insbesondere bei der Herstellung von PET- oder PET-PLA-Flaschen wird in Schritt I) eine mindestens 80 Gew.-% PET oder einer Mischung aus einem Mehrfachzucker wie Stärke, meist mit einem auf die Mischung bezogenen Anteil in einem Bereich von 30 bis 70 Gew.-%, vorzugsweise in einem Bereich von 40 bis 60 Gew.-%, mit PLA oder PLA mit PET beinhaltenden erfindungsgemäße thermoplastische Zusammensetzung bereitgestellt. Diese wird über Schritt II) zu einem Formkörperrohling in Schritt III) verarbeitet, der neben einem Verschlussbereich meist einen auf den Verschlussbereich folgenden stabilisierende Kragen aufweist, auf den ein hülsenartiger Flaschenbereich folgt. Durch den Verschlussbereich wird in Schritt IV) Gas eingespeist, das den Flaschenbereich bis zu einer Begrenzung durch die Flaschenform ausweitetet. Dabei nimmt gleichzeitig mit der Zunahme des Volumens der Flaschenbereichs der Massequerschnitt der Wandung des Flaschenbereichs ab. Für diese Art der Herstellung lassen sich beispielsweise Streckblasmaschinen einsetzen, die unter anderem von der Böhm Fertigungstechnik in Suhl GmbH, Deutschland, angeboten werden.

Weiterhin lassen sich erfindungsgemäß neben Flaschen auch andere Formkörper herstellen. Hierunter fallen Ein- und Mehrweggebinde, wie Teller, Schalen, Töpfe oder Becher, und Bestecke wie Messer, Gabeln oder Löffel. Besonders eignen sich die erfindungsgemäßen biologisch abbaubaren thermoplastischen Zusammensetzungen für diese Anwendungen.

Einen weiteren Beitrag zur Lösung mindestens eines Teils der eingangs genannten Aufgaben leisten auch Formkörper, vorzugsweise eine Flasche, besonders bevorzugt eine PET-Flasche, die durch das vorstehend beschriebene, erfindungsgemäße Verfahren zur Herstellung eines Formkörpers erhältlich sind. Bevorzugt weist dieser Formkörper einen Vergilbungsindex von kleiner als 6,64, vorzugsweise kleiner 6, besonders bevorzugt kleiner 5 sowie ferner bevorzugt kleiner 4,9 und darüber hinaus bevorzug kleiner 4,7 zeigt. Oftmals liegt der Vergilbungsindex nicht unter 2 oder 3.

Einen Beitrag zur Lösung mindestens eines Teils der eingangs genannten Aufgaben leistet auch die Verwendung eines Formtrennmittels aus
- mindestens einer auf zwei oder mehr Glycerin-Einheiten basierenden Alkoholkomponente; und
- mindestens einer Carbonsäure oder einem Derivat einer Carbonsäure oder beide,
in thermoplastischen Zusammensetzungen, insbesondere als Formtrennmittel in auf thermoplastischen Polyestern basierenden, thermoplastischen Zusammensetzungen. Im Zusammenhang mit bevorzugten Ausführungsformen des Formtrennmittels und dessen Bestandteile wird auf die vorstehenden Ausführungen Bezug genommen.

Als Formtrennmittel und als thermoplastische Polymere sind auch hier diejenigen Formtrennmittel und thermoplastischen Polymere bevorzugt, die bereits eingangs im Zusammenhang mit der erfindungsgemäßen, thermoplastischen Zusammensetzung als bevorzugte Formtrennmittel und thermoplastischen Polymere genannt wurden. Die Verwendung eines Formtrennmittels beinhaltend einen Ester aus mindestens einer auf zwei oder mehr Glycerin-Einheiten basierenden Alkoholkomponente, und mindestens einer Carbonsäure oder einem Derivat einer Carbonsäure oder beider, bei der Herstellung von Flüssigkeitsgebinden, insbesondere PET-Flaschen, aus thermoplastischen Polymeren stellt ferner eine bevorzugte Ausgestaltung der vorliegenden Erfindung dar. Im Zusammenhang mit bevorzugten Ausführungsformen des Formtrennmittels und dessen Bestandteile wird auf die vorstehenden Ausführungen Bezug genommen.

Die Erfindung wird nun anhand nicht limitierender Beispiele näher erläutert.

### BEISPIELE

### Herstellen von Diglycerinstearat

343 g Diglycerin (Firma Solvay GmbH, Deutschland), 725 g technische Stearinsäure (Edenor ST1 der Firma Cognis Oleochemicals GmbH, Deutschland) und Zinn(II)oxalat (Firma Fluka) werden zusammengegeben und unter Stickstoff aufgeheizt. Die Reaktion setzt bei etwa 200°C ein. Innerhalb von 3 Stunden wird durch Anlegen von Vakuum das Reaktionswasser weiter abgezogen und das Vakuum bis auf 15 mbar gesenkt. Anschließend wird die Reaktion für weitere 5 Stunden fortgeführt. Bei einer Säurezahl von < 1 ist die Reaktion beendet. Es wird auf 90°C abgekühlt, mit Bleicherde versetzt und filtriert. Nachdem das Produkt erstarrt war, wurde es geraspelt. Der Schmelzpunkt betrug 55°C.

### Herstellen einer thermoplastischen Zusammensetzung

In einem 15 kg Henschel-Mischer werden 6 kg Polyethylenterephthalat (PET SP04 der Firma Catalana de Polimers) eingetragen. Die Mischwandtemperatur betrug 40°C. Des Weiteren wurden 0,5 Gew.-% des zuvor hergestellten Diglycerinstearat als Formtrennmittel zugesetzt. Anschließend wurde das Material auf einem Granulator (ZSK 26Mcc) mit Stopfschnecke granuliert.

### Herstellen von Formkörpern aus der thermoplastischen Zusammensetzung

Zur Herstellung von Formkörpern aus der thermoplastischen Zusammensetzung wurde eine vollhydraulische Spritzgießmaschine mit einer hydraulischen Schließeinheit vom Typ Battenfeld HM800/210 eingesetzt. Die maximale Schließkraft beträgt 800 kN, der Schneckendurchmesser beträgt 25 mm. Als Versuchswerkzeug wurde ein Werkzeug mit einem konisch zulaufenden, rechteckigen Kern verwendet. Für die Bestimmung der Entformungskraft wurde eine Kraftmessdose mit einem maximalen Messbereich von 2 kN an die Auswerferstange angebracht. Die Vortrocknung der Formmasse erfolgte bei etwa 225°C für etwa 4 Stunden.

Die Entformungskräfte (angegeben in N) wurden bei 10 Zyklen gemessen:

| PET SP04 | PET SP04 + Diglycerinstearat |
|---|---|
| 861 | 436 |
| 881 | 434 |
| 880 | 432 |
| 877 | 436 |
| 870 | 434 |
| 880 | 403 |
| 879 | 430 |
| 872 | 408 |
| 877 | 433 |
| 873 | 394 |
| Mittelwert: 875 | Mittelwert: 424 |

Der vorstehenden Tabelle ist zu entnehmen, dass der Zusatz eines Esters aus Diglycerin und Stearinsäure als Formtrennmittel in der thermoplastischen Zusammensetzung zu einer signifikanten Verbesserung der Entformbarkeit und zu einem erkennbar verbesserten Ablöseverhalten von den Wandungen eines Spritzgießwerkzeugs führt. Es wurden Formkörper mit hoher Transparenz und glatter und gleichmäßiger Oberflächenstruktur erhalten. Weiterhin konnte ein Vergilbungsindex (Gelbwert) nach DIN 5033 im Durchschnitt von 6,64 für PET SP04 und 4,6 für PET SP04 + Diglycerinstearat ermittelt werden.

## Patentansprüche

1. Eine thermoplastische Zusammensetzung beinhaltend
a) ein lineares thermoplastisches Polymer, welches Polyalkylenterephthalat ist,
b) ein Formtrennmittel, sowie
c) gegebenenfalls weitere Zusatzstoffe,
wobei das Formtrennmittel einen Ester aus
- einem Diglycerin, einem Triglycerin oder einem Tetraglycerin oder mindestens zwei davon als Alkoholkomponente; und
- mindestens einer Carbonsäure oder einem Derivat einer Carbonsäure oder beiden, wobei die Carbonsäure oder das Derivat einer Carbonsäure eine Anzahl an Kohlenstoffatomen in einem Bereich von 6 bis 26 aufweist;
beinhaltet.

2. Die thermoplastische Zusammensetzung nach Anspruch 1, wobei die thermoplastische Zusammensetzung weniger als 0,001 Gew.-% eines gesättigten, α-olefinischen Oligomers aus mindestens einem C₆-C₁₈ α-Olefin enthält.

3. Die thermoplastische Zusammensetzung nach einem der vorhergehenden Ansprüche, wobei die Hydroxyl-Gruppen der Alkoholkomponente zu mindestens 10 Mol-% nicht mit der Carbonsäure-Gruppe der Carbonsäure verestert sind.

4. Die thermoplastische Zusammensetzung nach einem der vorhergehenden Ansprüche, wobei die thermoplastische Zusammensetzung
a1) 60 bis 99,99 Gew.-% des thermoplastischen Polyesters,
b1) 0,01 bis 20 Gew.-% des Formtrennmittels und
c1) 0 bis 20 Gew.-% der weiteren Zusatzstoffe,
jeweils bezogen auf das Gesamtgewicht der thermoplastischen Zusammensetzung, enthält, wobei die Summe der Komponenten a1) bis c1) 100 Gew.-% beträgt.

5. Die thermoplastische Zusammensetzung nach einem der Ansprüche 1 bis 3, wobei die thermoplastische Zusammensetzung
a2) 1 bis 69,99 Gew.%, des thermoplastischen Polyesters,
b2) 0,01 bis 20 Gew.-% des Formtrennmittels,
c2) mindestens 10 Gew.% einer biologisch abbaubaren Füllkomponente und
d2) 0 bis 20 Gew.% der weiteren Zusatzstoffe,
jeweils bezogen auf das Gesamtgewicht der thermoplastischen Zusammensetzung, enthält, wobei die Summe der Komponenten a2) bis d2) 100 Gew.-% beträgt.

6. Ein Verfahren zur Herstellung einer thermoplastischen Zusammensetzung beinhaltend
a) ein lineares thermoplastisches Polymer, welches Polyalkylenterephthalat ist,
b) ein Formtrennmittel, sowie
c) gegebenenfalls weitere Zusatzstoffe,
beinhaltend die Verfahrensschritte:
i) Bereitstellen des linearen thermoplastischen Polymers oder einer Vorstufe eines linearen thermoplastischen Polymers oder beiden;
ii) Bereitstellen des Formtrennmittels beinhaltend einen Ester, basierend auf
- einem Diglycerin, einem Triglycerin oder einem Tetraglycerin oder mindestens zwei davon als Alkoholkomponente; und
- mindestens einer Carbonsäure oder einem Derivat einer Carbonsäure oder beiden, wobei die Carbonsäure oder das Derivat einer Carbonsäure eine Anzahl an Kohlenstoffatomen in einem Bereich von 6 bis 26 aufweist;
iii) gegebenenfalls Bereitstellen weiterer Zusatzstoffe;
iv) Vermischen der Komponenten i), ii) und gegebenenfalls iii).

7. Das Verfahren nach Anspruch 6, wobei das Vermischen nach mindestens einer der nachfolgenden Maßnahmen erfolgt:
M1) bei der Glasübergangstemperatur des linearen thermoplastischen Polymers oder bei einer Temperatur oberhalb der Glasübergangstemperatur des linearen thermoplastischen Polymers;
M2) wobei das Formtrennmittel flüssiger ist als das lineare thermoplastische Polymer;
M3) wobei mindestens ein Teil des Formtrennmittels dem Vorläufer des linearen thermoplastischen Polymers zugesetzt wird, oder
M4) die verschiedenen Komponenten werden unterhalb der Schmelzverarbeitungstemperatur des linearen thermoplastischen Polymers gemischt.

8. Das Verfahren nach Anspruch 6 oder 7, wobei ein gesättigtes, α-olefinisches Oligomer aus mindestens einem C₆-C₁₈ α-Olefin in höchstens einer solchen Menge eingesetzt werden, dass die durch das Vermischen dei Komponenten a) bis c) erhaltene, thermoplastische Zusammensetzung weniger als 0,001 Gew.-% des gesättigten, α-olefinischen Oligomers enthält.

9. Das Verfahren nach Anspruch 6, wobei die Hydroxyl-Gruppen der Alkoholkomponente zu mindestens 10 Mol-% nicht mit der Carbonsäure-Gruppe der Carbonsäure verestert sind.

10. Das Verfahren nach einem der Ansprüche 6 bis 9, wobei die Komponenten a) bis c) in solchen relativen Mengen miteinander vermischt werden, dass die durch das Vermischen der Komponenten a) bis c) erhaltene, thermoplastische Zusammensetzung
a) 60 bis 99,99 Gew.-% des thermoplastischen Polymers,
b) 0,01 bis 20 Gew.-% des Formtrennmittels und
c) 0 bis 20 Gew.-% der weiteren Zusatzstoffe,
jeweils bezogen auf das Gesamtgewicht der thermoplastischen Zusammensetzung, enthält, wobei die Summe der Komponenten a) bis c) 100 Gew.-% beträgt.

11. Eine thermoplastische Zusammensetzung, erhältlich durch das Verfahren nach einem der Ansprüche 6 bis 10.

12. Die thermoplastische Zusammensetzung nach Anspruch 11 mit einem Vergilbungsindex von kleiner 6,64.

13. Ein Verfahren zur Herstellung eines auf einer thermoplastischen Zusammensetzung basierenden Formkörpers, umfassend die Verfahrensschritte:
I) Bereitstellen einer thermoplastischen Zusammensetzung nach einem der Ansprüche 1 bis 5, 11 oder 12;
II) Erhitzen der thermoplastischen Zusammensetzung auf die Glasübergangstemperatur des thermoplastischen Polymers oder auf einer Temperatur oberhalb der Glasübergangstemperatur des thermoplastischen Polymers;
III) Erstellung eines Formkörpers aus der im Verfahrensschritt II) hergestellten, erhitzten, thermoplastischen Zusammensetzung.

14. Das Verfahren nach Anspruch 13, wobei in einem weiteren Verfahrensschritt IV) mindestens eine Teilbereich des in Verfahrenschritt III) erhaltenen Formkörpers in seinem Massequerschnitt gegenüber Verfahrenschritt III) verringert wird.

15. Das Verfahren nach Anspruch 14, wobei die Querschnittsverringerung durch Anlegen eines Gasdrucks erfolgt.

16. Das Verfahren nach einem der Ansprüche 13 bis 15, wobei der Formkörper ein Flüssigkeitsgebinde ist.

17. Ein Formkörper, erhältlich durch ein Verfahren nach einem der Ansprüche 13 bis 16.

18. Der Formkörper nach Anspruch 17 mit einem Vergilbungsindex von kleiner 6,64.

19. Verwendung eines Formtrennmittels beinhaltend einen Ester aus
- einem Diglycerin, einem Triglycerin oder einem Tetraglycerin oder mindestens zwei davon als Alkoholkomponente; und
- mindestens einer Carbonsäure oder einem Derivat einer Carbonsäure oder beiden, wobei die Carbonsäure oder das Derivat einer Carbonsäure eine Anzahl an Kohlenstoffatomen in einem Bereich von 6 bis 26 aufweist;
als Formtrennmittel in auf thermoplastischen Polyestern basierenden, thermoplastischen Zusammensetzungen, wobei der thermoplastische Polyester Polyalkylenterephthalat ist.

20. Verwendung eines Formtrennmittels beinhaltend einen Ester aus
- einem Diglycerin, einem Triglycerin oder einem Tetraglycerin oder mindestens zwei davon als Alkoholkomponente; und
- mindestens einer Carbonsäure oder einem Derivat einer Carbonsäure oder beiden, wobei die Carbonsäure oder das Derivat einer Carbonsäure eine Anzahl an Kohlenstoffatomen in einem Bereich von 6 bis 26 aufweist;
bei der Herstellung von Flüssigkeitsgebinden aus Polyalkylenterephthalat.

## Claims

1. Thermoplastic composition comprising
a) a linear thermoplastic polymer which is polyalkylene terephthalate,
b) a mould-release agent, and also
c) optionally further additives,
wherein the mould-release agent comprises an ester of
- a diglycerol, a triglycerol or a tetraglycerol or at least two thereof as alcohol components; and
- at least one carboxylic acid or at least one derivative of a carboxylic acid or both, wherein the carboxylic acid or the derivative of a carboxylic acid has a number of carbon atoms in the range from 6 to 26.

2. Thermoplastic composition according to claim 1, wherein the thermoplastic composition comprises less than 0.001% by weight of a saturated, α-olefinic oligomer of at least one C₆-C₁₈ α-olefin.

3. Thermoplastic composition according to any of the preceding claims, wherein at least 10 mol% of the hydroxy groups of the alcohol component have not been esterified by the carboxylic acid group of the carboxylic acid.

4. Thermoplastic composition according to any of the preceding claims, wherein the thermoplastic composition comprises
a1) from 60 to 99.99% by weight of the thermoplastic polyester,
b1) from 0.01 to 20% by weight of the mould-release agent and
c1) from 0 to 20% by weight of the further additives,
based in each case on the total weight of the thermoplastic composition, wherein the sum of components a1) to c1) is 100% by weight.

5. Thermoplastic composition according to any of claims 1 to 3, wherein the thermoplastic composition comprises
a2) from 1 to 69.99% by weight of the thermoplastic polyester,
b2) from 0.01 to 20% by weight of the mould-release agent
c2) at least 10% by weight of a biodegradable filler component and
d2) from 0 to 20% by weight of the further additives,
based in each case on the total weight of the thermoplastic composition, wherein the sum of components a2) to d2) is 100% by weight.

6. Process for the production of a thermoplastic composition comprising
a) a linear thermoplastic polymer which is polyalkylene terephthalate,
b) a mould-release agent, and also
c) optionally further additives,
comprising the process steps of:
i) provision of the linear thermoplastic polymer or of a precursor of a linear thermoplastic polymer or both;
ii) provision of the mould-release agent comprising an ester based on
- a diglycerol, a triglycerol or a tetraglycerol or at least two thereof as alcohol components; and
- at least one carboxylic acid or at least one derivative of a carboxylic acid or both, wherein the carboxylic acid or the derivative of a carboxylic acid has a number of carbon atoms in the range from 6 to 26;
iii) optionally provision of further additives;
iv) mixing of components i), ii) and optionally iii).

7. Process according to claim 6, wherein the mixing is carried out in accordance with at least one of the following measures:
M1) at the glass transition temperature of the linear thermoplastic polymer or at a temperature above the glass transition temperature of the linear thermoplastic polymer;
M2) wherein the mould-release agent is more liquid than the linear thermoplastic polymer;
M3) wherein at least one portion of the mould-release agent is added to the precursor of the linear thermoplastic polymer, or
M4) the various components are mixed below the melt-processing temperature of the linear thermoplastic polymer.

8. Process according to claim 6 or 7, wherein a saturated, α-olefinic oligomer of at least one C₆-C₁₈ α-olefin is used in at most a quantity such that the thermoplastic composition obtained via the mixing of components a) to c) comprises less than 0.001% by weight of the saturated, α-olefinic oligomer.

9. Process according to claim 6, wherein at least 10 mol% of the hydroxy groups of the alcohol component have not been esterified by the carboxylic acid group of the carboxylic acid.

10. Process according to any of claims 6 to 9, wherein components a) to c) are mixed with one another in relative quantities such that the thermoplastic composition obtained via the mixing of components a) to c) comprises
a) from 60 to 99.99% by weight of the thermoplastic polymer,
b) from 0.01 to 20% by weight of the mould-release agent and
c) from 0 to 20% by weight of the further additives,
based in each case on the total weight of the thermoplastic composition, wherein the sum of components a) to c) is 100% by weight.

11. Thermoplastic composition obtainable via the process according to any of claims 6 to 10.

12. Thermoplastic composition according to claim 11 with a yellowness index of less than 6.64.

13. Process for the production of a moulded article based on a thermoplastic composition, comprising the process steps of:
I) provision of a thermoplastic composition according to any of claims 1 to 5, 11 or 12;
II) heating of the thermoplastic composition to the glass transition temperature of the thermoplastic polymer or to a temperature above the glass transition temperature of the thermoplastic polymer;
III) production of a moulded article made of the heated thermoplastic composition produced in step II).

14. Process according to Claim 13, wherein in a further step IV) the solid cross section of at least one partial region of the moulded article obtained in step III) is reduced in comparison with step III).

15. Process according to Claim 14, wherein the cross section reduction is achieved via application of a gas pressure.

16. Process according to any of Claims 13 to 15, wherein the moulded article is a container for liquid.

17. Moulded article obtainable via a process according to any of Claims 13 to 16.

18. Moulded article according to Claim 17 with a yellowness index of less than 6.64.

19. Use of a mould-release agent comprising an ester of
- a diglycerol, a triglycerol or a tetra-glycerol or at least two thereof as alcohol components; and
- at least one carboxylic acid or at least one derivative of a carboxylic acid or both, wherein the carboxylic acid or the derivative of a carboxylic acid has a number of carbon atoms in the range from 6 to 26;
as mould-release agent in thermoplastic compositions based on thermoplastic polyesters, wherein the thermoplastic polyester is polyalkylene terephthalate.

20. Use of a mould-release agent comprising an ester of
- a diglycerol, a triglycerol or a tetra-glycerol or at least two thereof as alcohol components; and
- at least one carboxylic acid or at least one derivative of a carboxylic acid or both, wherein the carboxylic acid or the derivative of a carboxylic acid has a number of carbon atoms in the range from 6 to 26;
in the production of polyalkylene terephthalate containers for liquid.

## Revendications

1. Composition thermoplastique contenant :
a) un polymère thermoplastique linéaire, qui est le polyalkylène téréphtalate,
b) un agent de démoulage et
c) éventuellement d'autres additifs,
l'agent de démoulage contenant un ester
- d'une diglycérine, d'une triglycérine ou d'une tétraglycérine ou d'au moins deux d'entre elles en tant que composant alcool ; et
- d'au moins un acide carboxylique ou d'un dérivé d'un acide carboxylique ou les deux, l'acide carboxylique ou le dérivé d'un acide carboxylique présentant un nombre d'atomes de carbone dans une plage allant de 6 à 26.

2. Composition thermoplastique selon la revendication 1, dans laquelle la composition thermoplastique contient moins de 0,001 % en poids d'un oligomère α-oléfinique saturé d'au moins une α-oléfine en C₆-C₁₈.

3. Composition thermoplastique selon l'une quelconque des revendications précédentes, dans laquelle au moins 10 % en moles des groupes hydroxyle du composant alcool ne sont pas estérifiés avec le groupe acide carboxylique de l'acide carboxylique.

4. Composition thermoplastique selon l'une quelconque des revendications précédentes, dans laquelle la composition thermoplastique contient :
a1) 60 à 99,99 % en poids du polyester thermoplastique,
b1) 0,01 à 20 % en poids de l'agent de démoulage et
c1) 0 à 20 % en poids des autres additifs,
à chaque fois par rapport au poids total de la composition thermoplastique, la somme des composants a1) à c1) étant de 100 % en poids.

5. Composition thermoplastique selon l'une quelconque des revendications 1 à 3, dans laquelle la composition thermoplastique contient :
a2) 1 à 69,99 % en poids du polyester thermoplastique,
b2) 0,01 à 20 % en poids de l'agent de démoulage,
c2) au moins 10 % en poids d'un composant charge biodégradable et
d2) 0 à 20 % en poids des autres additifs,
à chaque fois par rapport au poids total de la composition thermoplastique, la somme des composants a2) à d2) étant de 100 % en poids.

6. Procédé de fabrication d'une composition thermoplastique, contenant :
a) un polymère thermoplastique linéaire, qui est le polyalkylène téréphtalate,
b) un agent de démoulage et
c) éventuellement d'autres additifs,
comprenant les étapes de procédé suivantes :
i) la préparation du polymère thermoplastique linéaire ou d'un précurseur d'un polymère thermoplastique linéaire ou les deux ;
ii) la préparation de l'agent de démoulage contenant un ester, à base :
- d'une diglycérine, d'une triglycérine ou d'une tétraglycérine ou d'au moins deux d'entre elles en tant que composant alcool ; et
- d'au moins un acide carboxylique ou d'un dérivé d'un acide carboxylique ou les deux, l'acide carboxylique ou le dérivé d'un acide carboxylique présentant un nombre d'atomes de carbone dans une plage allant de 6 à 26 ;
iii) éventuellement la préparation d'autres additifs ;
iv) le mélange des composants i), ii) et éventuellement iii).

7. Procédé selon la revendication 6, dans lequel le mélange a lieu par au moins une des mesures suivantes :
M1) à la température de transition vitreuse du polymère thermoplastique linéaire ou à une température supérieure à la température de transition vitreuse du polymère thermoplastique linéaire ;
M2) l'agent de démoulage étant plus liquide que le polymère thermoplastique linéaire ;
M3) au moins une partie de l'agent de démoulage étant ajoutée au précurseur du polymère thermoplastique linéaire, ou
M4) les différents composants étant mélangés en-dessous de la température d'usinage à l'état fondu du polymère thermoplastique linéaire.

8. Procédé selon la revendication 6 ou 7, dans lequel un oligomère α-oléfinique saturé d'au moins une α-oléfine en C₆-C₁₈ est utilisé en une quantité maximale telle que la composition thermoplastique obtenue par mélange des composants a) à c) contienne moins de 0,001 % en poids de l'oligomère α-oléfinique saturé.

9. Procédé selon la revendication 6, dans lequel au moins 10 % en moles des groupes hydroxyle du composant alcool ne sont pas estérifiés avec le groupe acide carboxylique de l'acide carboxylique.

10. Procédé selon l'une quelconque des revendications 6 à 9, dans lequel les composants a) à c) sont mélangés les uns avec les autres en quantités relatives telles que la composition thermoplastique obtenue par mélange des composants a) à c) contienne :
a) 60 à 99,99 % en poids du polymère thermoplastique,
b) 0,01 à 20 % en poids de l'agent de démoulage et
c) 0 à 20 % en poids des autres additifs,
à chaque fois par rapport au poids total de la composition thermoplastique, la somme des composants a) à c) étant de 100 % en poids.

11. Composition thermoplastique, pouvant être obtenue par le procédé selon l'une quelconque des revendications 6 à 10.

12. Composition thermoplastique selon la revendication 11, présentant un indice de jaunissement inférieur à 6,64.

13. Procédé de fabrication d'un corps moulé à base d'une composition thermoplastique, comprenant les étapes de procédé suivantes :
I) la préparation d'une composition thermoplastique selon l'une quelconque des revendications 1 à 5, 11 ou 12 ;
II) le chauffage de la composition thermoplastique à la température de transition vitreuse du polymère thermoplastique ou à une température supérieure à la température de transition vitreuse du polymère thermoplastique ;
III) la fabrication d'un corps moulé à partir de la composition thermoplastique chauffée fabriquée à l'étape de procédé II).

14. Procédé selon la revendication 13, dans lequel, lors d'une étape de procédé IV) supplémentaire, la section massive d'au moins une partie du corps moulé obtenu à l'étape de procédé III) est réduite par rapport à l'étape de procédé III).

15. Procédé selon la revendication 14, dans lequel la réduction de section a lieu par application d'une pression de gaz.

16. Procédé selon l'une quelconque des revendications 13 à 15, dans lequel le corps moulé est un récipient de liquide.

17. Corps moulé, pouvant être obtenu par un procédé selon l'une quelconque des revendications 13 à 16.

18. Corps moulé selon la revendication 17, présentant un indice de jaunissement inférieur à 6,64.

19. Utilisation d'un agent de démoulage contenant un ester
- d'une diglycérine, d'une triglycérine ou d'une tétraglycérine ou d'au moins deux d'entre elles en tant que composant alcool ; et
- d'au moins un acide carboxylique ou d'un dérivé d'un acide carboxylique ou les deux, l'acide carboxylique ou le dérivé d'un acide carboxylique présentant un nombre d'atomes de carbone dans une plage allant de 6 à 26 ;
en tant qu'agent de démoulage dans des compositions thermoplastiques à base de polyesters thermoplastiques, le polyester thermoplastique étant le polyalkylène téréphtalate.

20. Utilisation d'un agent de démoulage contenant un ester
- d'une diglycérine, d'une triglycérine ou d'une tétraglycérine ou d'au moins deux d'entre elles en tant que composant alcool ; et
- d'au moins un acide carboxylique ou d'un dérivé d'un acide carboxylique ou les deux, l'acide carboxylique ou le dérivé d'un acide carboxylique présentant un nombre d'atomes de carbone dans une plage allant de 6 à 26 ;
lors de la fabrication de récipients de liquide à base de polyalkylène téréphtalate.
